# EUROPEAN PATENT APPLICATION

(11) **EP 1 939 867 A1**
(43) Date of publication of application: **02.07.2008**
(21) Application number: 06127298.5
(22) Date of filing: 28.12.2006
(51) Int. Cl.: G11B 7/09

(54) **Pickup for accessing moving storage media and drive having the pickup**

(71) Applicant: Deutsche Thomson OHG, 30625 Hannover (DE)
(72) Inventor: Bammert, Michael, 78739 Hardt (DE); Suzuki, Tsuneo, 78087 Mönchweiler (DE); Dupper, Rolf, 78050 Villingen-Schwenningen (DE)
(74) Representative: Thies, Stephan

(57) **Abstract**

A pickup (P) for accessing moving storage media (D) carrying substantially parallel information tracks (T) has a carrier (C), an actuator (A) with a lens (3) and suspension means (4) joining the carrier (C) and the actuator (A). The actuator (A) is movable in a focus direction (Y) and in a tracking direction (X) and has a substantially rectangular flat board (B). The flat board (B) is arranged orthogonal to the focus direction (Y) and carries the lens (3) at its upper side facing the tracks (T) of the media (D). The flat board (B) carries tracking and focus coils. The pickup (P) has a magnet configuration connected to the carrier (C) with at least two tracking magnets (7), which are arranged in the tracking direction (X) at opposite sides of the flat board (B) and extend orthogonal to the focus direction (Y) above and/or under the flat board (B), and with at least two focus magnets (8), which are arranged in the direction of the tracks (T) at opposite sides of the flat board (B) and extend orthogonal to the direction of the tracks (T). According to the invention, the elastic means are constituted as four elastic elements (4), which are arranged at the lower side of the flat board (B) at each of its four corners (5).

## Description

### BACKGROUND OF THE INVENTION

### FIELD OF THE INVENTION

The present invention is related to a pickup for accessing moving storage media according to the preamble of claim 1. Pickups are used as part of a recording and/or reproducing apparatus, e.g. of a DVD player, a DVD recorder or of similar apparatuses.

### DESCRIPTION OF THE PRIOR ART

A pickup for accessing moving storage media records and/or reproduces information with respect to the moving storage media carrying substantially parallel information tracks, namely a turning disk, while moving in the radial direction of the disk.

A pickup, referred to as an objective lens actuator, which uses an actuator with a flat form, referred to as an objective lens holder, facilitates manufacturing and fabrication, is described in the US 2006/0143639. The pickup controls the focus direction, tracking direction and radial tilt direction of its optical pickup head.

The pickup comprises a carrier, constituted as a ferromagnetic yoke, a damper holder and a printed circuit, the actuator with a lens and suspension wires extending from a rear of the carrier and joining the carrier and the actuator. The actuator is constituted as a substantially rectangular flat board. The flat board is arranged orthogonal to the focus direction and carries tracking coils and focus coils. The lens is arranged on the upper side, which is directed to the disk, at the centre of the flat board. A counter weight can be provided.

In addition the pickup comprises a magnet configuration connected to the carrier with four tracking magnets and two focus magnets. Two tracking magnets each are arranged at opposite sides of the flat board in the tracking direction and extend orthogonal to the focus direction above and under the flat board. The two focus magnets are arranged in front and behind the flat board and extend orthogonal to the direction of the tracks.

The suspension wires both movably support the actuator, as well as apply currents to the coils on the actuator. The coils and the magnet configuration, all together referred to as a magnetic driving portion, initiate the movements of the actuator. The actuator is movable relatively to the carrier in the focus direction, the tracking direction and in the so-called radial tilt direction in a plane spanned by the focus direction and the tracking direction, respectively. By moving the actuator with the lens, the beam spot can be accurately located on the disk.

By means of the suspension with suspension wires, the actuator with the lens is not able to move in a tangential tilt direction, in other words in an information direction, which is parallel to the direction of the information tracks, namely of the tangent to the tracks at a scanning spot. In addition, a pickup with suspension wires, which extend from the rear of the carrier, in particular from the damper holder, to the flat board, requires a certain elongation parallel to the suspension wires, i. g. in the information direction.

A pickup, referred to as an optical pickup actuator, with alternative suspension means is described in the US 5,724,324 B. The pickup comprises a supporting part, which has a yoke with a flat bottom with a guide projector, and which has an elastic member into which the guide projector is inserted. The pickup also comprises an objective lens fixing part, which has a flat plate with an objective lens and with a through hole for the guide projector. The objective lens part is suspended by the elastic member in a state that the guide projector is inserted into the through hole.

It may be seen as a disadvantage, that the move performance of the suspension means with an elastic member onto a guide projector is not homogeneous in focus direction. There is a risk for the flat plate to contact the guide projector, when it moves in the focus direction, and to induce unwanted tilt movement. In addition, it is difficult to realise a wanted tilt movement in order to adjust a tilt position error. As an additional risk, the suspension means may be contaminated and loose its function. The suspension means also requires a large amount of effort to manufacture.

### SUMMARY OF THE INVENTION

It is therefore desirable to improve a pickup according to the preamble of claim 1 in reference to the overall compactness of the pickup. In particular, it is desirable to improve the suspension means of the pickup.

According to the invention this is achieved by the features of claim 1. Possible advantageous developments of the invention are specified in the dependent claims.

A pickup for accessing moving storage media carrying substantially parallel information tracks has a carrier, an actuator with a lens and suspension means joining the carrier and the actuator. The actuator is movable in a focus direction and in a tracking direction. It has a substantially rectangular flat board. The flat board is arranged orthogonal to the focus direction and carries the lens at its upper side facing the tracks of the media. The flat board also carries tracking coils and focus coils.

The pickup has a magnet configuration connected to the carrier with at least two tracking magnets and with at least two focus magnets. The tracking magnets are arranged, in the tracking direction, at opposite sides of the flat board and extend orthogonal to the focus direction above and/or under the flat board. The focus magnets are arranged, in the direction of the tracks, at opposite sides of the flat board and extend orthogonal to the direction of the tracks.

According to the invention the elastic means are constituted as four elastic elements arranged at the lower side of the flat board at each of its four corners.

A pickup with these suspension means does not require a holder extending orthogonal to the information direction. The holder can be arranged under the flat board. As a result, the pickup can be constructed with a short length in the information direction. Suspension means constituted as four elastic elements are easy to manufacture and they are less susceptible to contaminations.

As an additional advantage, an actuator according to the invention, which comprises four elastic elements at the corners of the flat board, is able to perform so-called tangential tilt motion in the information direction. As a result, the performance of the pickup in order to adjust position errors is inmproved.

The elastic elements can be constituted as spiral springs. As a result, the performance of the movements of the actuator in all directions is improved.

As an alternative, the elastic elements are constituted as leaf springs. As a result, the actuator is suspended with a high stability. Such suspension means can be used for an actuator in order to move substantially in only two dimensions.

Advantageously, longer sides of the flat board can be arranged, parallel to the tracking direction, between the focus magnets while side parts of the flat board can project from the focus magnets at both sides. The elastic elements can be arranged under the side parts beside the focus magnets. Preferably, the tracking magnets can be arranged in the region of the side parts of the flat board.

Advantageously, the carrier can comprise a base carrying the magnet configuration and a holder for the elastic elements. The holder can have a shape substantially corresponding to that of the flat board and can be arranged under the base. The elastic elements can be connected to the holder at its four holder corners. The holder can comprise at least one additional optical or electronic component, in particular one of a laser diode, a photo detector, a laser power control circuit or a photo detector signal conditioning circuit.

The lens can be arranged in the centre of the flat board. As an alternative, the lens can be arranged at one of the corners of the flat board while a counter weight is arranged at a corner which is arranged at a diagonal from the corner to the opposite side of the flat board. An asymmetrically arranged lens is located near the outer surface of the pickup at one side of the flat board in the tracking direction. As a result, a pickup with such a lens can record and/or reproduce data near the centre of the disk.

Preferably, a moving storage media drive is provided with a pickup according to the invention.

The carrier, being an ensemble of rigidly connected elements, does not preclude that typically the pickup as a whole, including a carrier, suspension wires and an actuator, is movable and is being moved, so that all storage locations on the medium can be accessed, in a direction orthogonal to information tracks on the storage medium. In this, accessing shall encompass reading access for reading information from the storage medium, or writing access for writing or recording information onto the storage medium, or combinations of reading and writing access.

One possible form of moving storage media is disks carrying concentric circular or spiral information tracks, with the access being of reflective type where an access light beam is being generated and focused onto the information track and a reflected light beam coming back from and being modulated by the information track is being focused onto a photo detector arrangement and being evaluated. However, it is within the scope of this invention to be used on other forms of optical recording medium having information tracks in layers, like those in card or tape form; and regardless whether the access principle is of a reflective or of a transductive type.

### BRIEF DESCRIPTION OF THE DRAWINGS

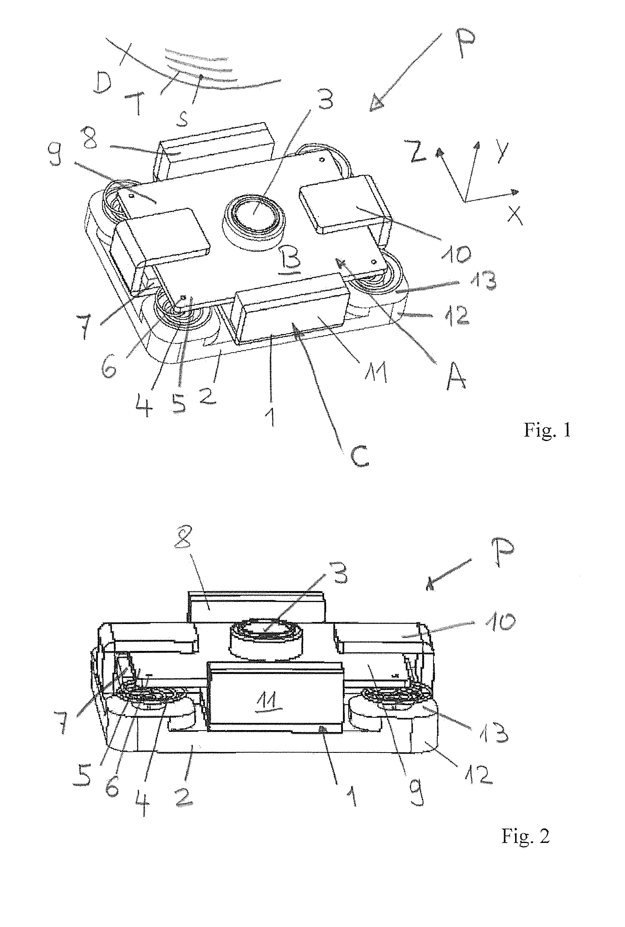

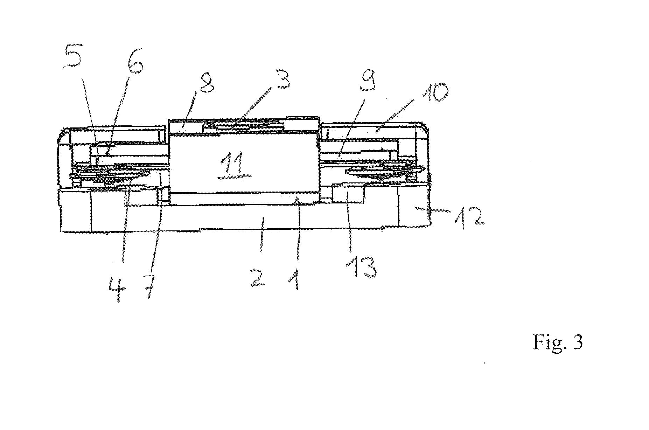

The invention will be explained in more detail using two embodiments, illustrated in figures 1 to 6.

In the figures:
- Figure 1: shows a simplified perspective top view of a pickup of a first embodiment of the invention;
- Figure 2: shows a simplified perspective side view of the pickup,
- Figure 3: shows a varied simplified perspective side view of the pickup;
- Figure 4: shows a simplified perspective side view of the pickup from another side;
- Figure 5: shows a simplified perspective view of an elastic element of a second embodiment of the invention and
- Figure 6: shows a simplified perspective side view of a pickup with the elastic elements and without magnets.

### DETAILED DESCRIPTION OF A FIRST EMBODIMENT OF THE INVENTION

With reference to the figures, according to the invention a pickup P for accessing moving storage media, namely a disk D, has a carrier C with a base 1 and a holder 2, an actuator A with a lens 3 and suspension means constituted as four elastic elements 4 joining the carrier C and the actuator A.

The actuator A comprises a flat board B, which is arranged orthogonal to a focus direction Y, i.e. orthogonal to the disk D carrying substantially circular information tracks T shown in the figures with very enlarged, disproportionate distance. The flat board B carries the lens 3 at its upper side facing the tracks T of the disk D. The lens 3 is arranged in the centre of the flat board B. The flat board B has a substantially rectangular shape. The elastic elements 4 are arranged at each of the four corners 5 of the flat board B and are soldered with one end to the flat board B by soldering points 6.

The flat board B carries tracking coils and focus coils, which are not shown in the figures, on its upper side. In particular, the flat board B is constituted by a printed circuit board.

The pickup P has a magnet configuration, which is carried by and connected to the carrier C, with two tracking magnets 7 and with two focus magnets 8. The tracking magnets 7 are arranged at opposite sides of the flat board B in a tracking direction X, which is parallel to the surface of the disk D and orthogonal to the information tracks T, and extend under the flat board B orthogonal to the focus direction Y. The two focus magnets 8 are arranged in the direction of the tracks T at opposite sides of the flat board B, orthogonal to the direction of the tracks T.

The flat board B is arranged with its longer sides, which extend parallel to the tracking direction X, between the focus magnets 8, while the flat board B projects from the focus magnets 8 at both sides with side parts 9. The elastic elements 4 are arranged under the side parts 9 beside the focus magnets 8 at the corners 5 of the flat board B. The tracking magnets 7 are arranged in the region of the side parts 9 of the flat board B between the elastic elements 4.

The tracking magnets 7 and the focus magnets 8 are arranged on the base 1 of the carrier C. The base 1 extends with a bottom section, occluded in the figures, under the flat board B in a plane orthogonal to the focus direction Y and parallel to the disk D. With other word, the base 1 extends in the plane spanned by the tracking direction X and an information direction Z, which is parallel to the direction of the tracks T, namely to the tangent to the information tracks T at a scanning spot S. The bottom section of the base 1 is smaller than the flat board B in a way that the space under the corners 5 of the flat board B is free from the base 1.

The base 1 comprises two tracking arms 10, of which each extends under the flat board B in the region of the side part 9, extends around the side part 9 and extends above the flat board B orthogonal to the focus direction Y. The tracking arms 10 are arranged at opposite sides of the base 1 in the tracking direction X and constitute yokes for the tracking magnets 7. A gap between the flat board B and the upper part of the tracking arms 10 has a certain width to enable e.g. focus movements of the actuator A.

The base 1 of the carrier C comprise two focus arms 11 at its opposite sides, which are orthogonal to the sides with the tracking arms 10. Each of the focus arms 11 extends under the flat board B in a region near the corresponding focus magnet 8, projects from the flat board B under the focus magnet 8 and extends orthogonal to the bottom of the base 1 facing the magnet 8 on its side opposite to the flat board B. The focus arms 11 have a shape, which corresponds to the shape of the focus magnets 8, and constitute yokes for the focus magnets 8.

The holder 2 of the carrier C for the elastic elements 4 has a shape which substantially corresponds to that of the flat board B. The holder 2 is arranged under the base 1 while the elastic elements 4 are connected to the holder 2 at the four holder corners 12.

The elastic elements 4 are constituted as spiral springs. The spirals are wound in one or more planes orthogonal to the focus direction Y. Each of the elastic elements 4 extends from the holder corners 12 to the corners 5 of the flat board B where they are connected to the flat board B by the soldering points 6. The holder 2 comprises means, such as a second printed circuit board, not visible in the figures, with soldering points for the other ends of the elastic elements 4.

Each of the holder corners 12 is comprised with a cylindrical element 13 through which the corresponding elastic element 4 is connected to the means with the soldering points. Each of the cylindrical elements 13 comprises damping material inside, which damps the elastic element 4 extending through the cylindrical element 13. The elastic elements 4 and the cylindrical elements 13 are arranged at the free spaces under the corners 5 of the flat board B.

By means of the suspension with the elastic elements 4, the actuator A with the lens 3, namely the flat board B, is able to perform focus motion in the focus direction Y. Additionally, the actuator A is able to perform tracking motion in the tracking direction X. Additionally, the actuator A is able to perform so-called radial tilt motion by rotating around an information direction Z which is parallel to the direction of the tracks T. The radial tilt motion take place in a plane spanned by the focus direction Y and the tracking direction X.

According to the invention the actuator, which comprises the four elastic elements 4 at the corners 5 of the flat board B, is also able to perform so-called tangential tilt motion in the information direction Z. As a result, the performance of the pickup in order to adjust position errors is improved.

As an alternative, the holder 2 comprises at least one additional optical or electronic component, which is at least one of a laser diode, a photo detector, a laser power control circuit or a photo detector signal conditioning circuit.

As an alternative, the tracking magnets 7 can be arranged above the flat board B or above and under the flat board B.

As an alternative, the flat board B can carry attached tracking coils and focus coils.

As an alternative, the lens 3 can be arranged at one of the corners 5 of the flat board B while a counter weight is arranged at a corner 5 which is arranged diagonally from the corner 5 to the opposite side of the flat board B. The lens 3 can be arranged at one of the side parts 9 next to one of the focus magnets 8. As a result, the lens 3 is arranged asymmetrically in reference to an axis parallel to the information direction Z through a centre of the flat board B while the lens 3 and the counter weight are symmetrically arranged in reference to the centre.

A pickup P according to this invention can be used in the so-called slide or sled design of optical media drives, where it is shiftably fitted to a frame structure of the drive, with appropriate linear driving means for realising the shift, such as linear motors or a motor driven threaded rod. Alternatively, the pickup P according to this invention is also usable in the so-called swivel arm design, where it is pivotably mounted on the end of an arm having a pivoting axis parallel to the focus direction. In that way, the pickup P is movable across the tracks T on the surface of the disk D along an arc which has its main extension in the tracking direction X.

### DETAILED DESCRIPTION OF A SECOND EMBODIMENT OF THE INVENTION

The second embodiment of the invention corresponds to the first embodiment except for the following features:

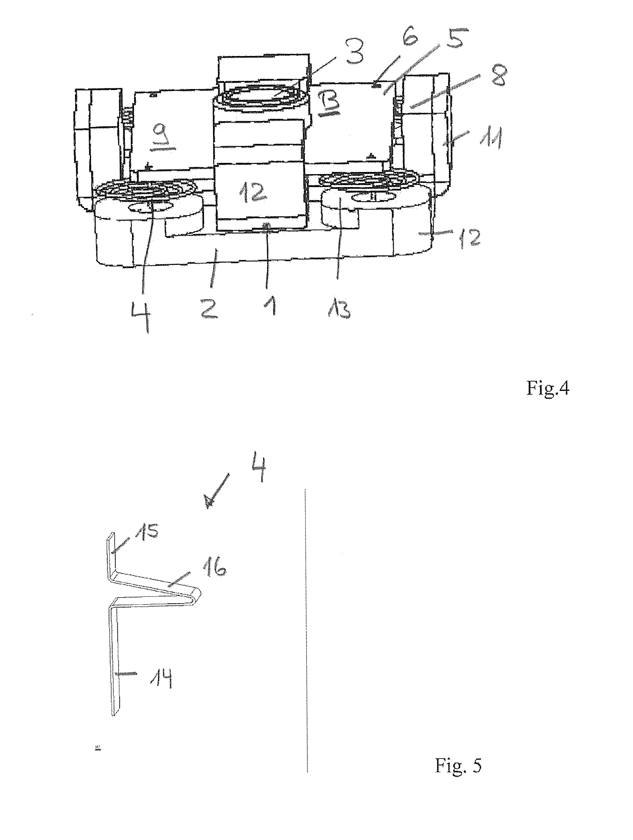

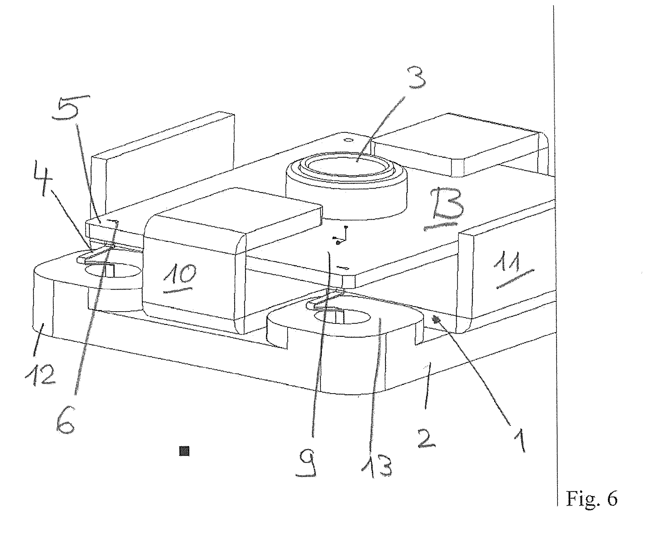

With reference to the figures 5 and 6, the elastic elements 4 are constituted as leaf springs, which each extends with a holder section 15 and a board section 16 in the focus direction Y and comprise a curved section 17, in particular a V-shaped section, between the holder section 15 and the board section 16. The elastic elements 4 are connected to the flat board B at soldering slots 18.

Figure 6 shows a pickup without the tracking magnets 7 and the focus magnets 8, which correspond to those of the first embodiment. The figure demonstrates the elastic elements 4 and also the tracking arms 10 and the focus arms 11 of the base 1.

The elastic elements 4 constituted as leaf springs provide the pickup with suspension means with a high stability. Such suspension means can be used for an actuator in order to move it substantially in only two dimensions. A movement in the third direction, the information direction Z, is limited.

## Claims

1. A pickup (P) for accessing moving storage media (D) carrying substantially parallel information tracks (T),
the pickup (P) having a carrier (C), an actuator (A) with a lens (3) and suspension means (4) joining the carrier (C) and the actuator (A),
the actuator (A) movable in a focus direction (Y) and in a tracking direction (X) and having a substantially rectangular flat board (B),
the flat board (B) arranged orthogonal to the focus direction (Y) and carrying the lens (3) at its upper side facing the tracks (T) of the media (D),
the flat board (B) carrying tracking and focus coils,
the pickup (P) having a magnet configuration connected to the carrier (C) with at least two tracking magnets (7) arranged in the tracking direction (X) at opposite sides of the flat board (B) and extending orthogonal to the focus direction (Y) above and/or under the flat board (B) and with at least two focus magnets (8) arranged in the direction of the tracks (T) at opposite sides of the flat board (B) and extending orthogonal to the direction of the tracks (T),
**characterised in that** the elastic means are constituted as four elastic elements (4) arranged at the lower side of the flat board (B) at each of its four corners (5).

2. A pickup (P) according to claim 1, where the elastic elements (4) are constituted as spiral springs.

3. A pickup (P) according to claim 1, where the elastic elements (4) are constituted as leaf springs.

4. A pickup (P) according to one of the claims 1 to 3, where longer sides of the rectangular flat board (B) are arranged between the focus magnets (8) parallel to the tracking direction (X), where the flat board (B) projects from the focus magnets (8) at both sides with side parts (9) and where the elastic elements (4) are arranged under the side parts (9) beside the focus magnets (8).

5. A pickup (P) according to claim 4, where the tracking magnets (7) are arranged in the region of the side parts (9) of the flat board (B) between the elastic elements (4).

6. A pickup (P) according to one of the claims 1 to 5, where the carrier (C) comprises a base (1) carrying the magnet configuration and a holder (2) for the elastic elements (4) and where the holder (2) with a shape substantially corresponding to that of the flat board (B) is arranged under the base (1) while the elastic elements (4) are connected to the holder (2) at its four holder corners (12).

7. A pickup (P) according to one of the claims 1 to 6, where the holder (2) comprises at least one additional optical or electronic component.

8. A pickup (P) according to the claim 7, where the additional component is one of a laser diode, a photo detector, a laser power control circuit or a photo detector signal conditioning circuit.

9. A pickup (P) according to one of the claims 1 to 8, where the lens (3) is arranged in the centre of the flat board (B).

10. A pickup (P) according to one of the claims 1 to 8, where the lens (3) is arranged at one of the corners (5) of the flat board (B) while a counter weight is arranged at a corner (5) which is arranged at a diagonal from the corner (5) to the opposite side of the flat board (B).

11. A moving storage media drive **characterised in that** it has a pickup (P) according to one of claims 1 to 10.
